# FASCICULE DE BREVET EUROPEEN

(11) **EP 1 777 090 B1**
(45) Date de publication et mention de la délivrance du brevet: **14.12.2011**
(21) Numéro de dépôt: 06122469.7
(22) Date de dépôt: 17.10.2006
(51) Int. Cl.: B60J 3/02

(54) **Dispositif d'occultation d'un pavillon vitré d'un véhicule automobile, équipé de palettes pare-soleil, et véhicule automobile correspondant**
Beschattungsvorrichtung mit Sonnenschutzklappen für die Dachfensterfläche von einem Motorfahrzeug und korrespondierendes Motorfahrzeug
Shading device for glazed roof with sun visor flaps of a motor vehicle and corresponding motor vehicle

(30) Priorité: 15.12.2005 FR 0512779; 18.10.2005 FR 0510616
(43) Date de publication de la demande: 25.04.2007
(73) Titulaire: Advanced Comfort Systems France SAS - ACS France, 79300 Bressuire (FR)
(72) Inventeur: Fourel, Pascal, 35400 Saint-Malo (FR)
(74) Mandataire: Bioret, Ludovic

(56) Documents cités:
- EP-A- 0 945 293
- EP-A- 1 422 093
- EP-A- 1 495 889
- US-A- 4 674 789
- US-A- 4 738 481
- US-A- 5 192 110

## Description

Le domaine de l'invention est celui des véhicules automobiles, et plus particulièrement de l'occultation de surfaces vitrées correspondant à un pavillon vitré et/ou à la partie supérieure d'un pare-brise se prolongeant vers le pavillon du véhicule.

Plus précisément, l'invention concerne l'occultation de ces zones vitrées, et la protection du conducteur et du passager avant contre les rayons du soleil, et plus généralement l'éblouissement.

Les surfaces vitrées, et en particulier les pavillons vitrés, sont de plus en plus développées dans les véhicules automobiles. Ils confèrent un confort et une impression d'espace, ainsi qu'une meilleure visibilité. Cependant, dans certains cas, notamment quand le soleil est fort, il est souhaitable de pouvoir occulter au moins en partie ces surfaces vitrées.

Pour cela, on a développé plusieurs techniques. La plus connue consiste à utiliser un ou plusieurs stores à enrouleur, actionnables manuellement ou de façon motorisée.

Une autre approche, plus simple techniquement, mais présentant des inconvénients en terme d'encombrement, notamment lorsque le dispositif est en position repliée, est la mise en oeuvre d'un velum, c'est-à-dire d'une plaque rigide, qui peut être ramené en position déployée en regard de la zone à occulter, et rangé en position repliée dans un logement prévu à cet effet dans la garniture intérieure du véhicule.

Par ailleurs, pour protéger le conducteur et le passager avant contre l'éblouissement, en particulier lorsque le soleil est relativement bas, on utilise depuis très longtemps des palettes pare-soleil, montées mobiles en rotation au niveau de la partie supérieure du pare-brise, pour pouvoir être soit repliées parallèlement au pavillon en position de repos, soit inclinées vers une position de protection contre l'éblouissement, dans une position verticale ou plaquée contre la partie supérieure du pare-brise.

De tels pare-soleil sont difficiles à installer sur les véhicules fortement vitrés, et notamment sur ceux ne présentant pas d'interruption entre le pare-brise et le pavillon vitré. Non seulement la solidarisation d'une palette pare-soleil sur une surface vitrée serait relativement difficile, mais en outre l'aspect esthétique conféré par la surface vitrée serait fortement dégradé.

On a donc imaginé comme dans le document US 4 674 789, de monter les palettes pare-soleil sur l'élément d'occultation du pavillon. Ainsi, les palettes sont disponibles lorsque l'élément d'occultation (qu'il s'agisse d'un store ou d'un velum) est déployé. En revanche, lorsque ce dispositif est replié, il ramène avec lui les palettes pare-soleil, qui sont alors escamotées.

Cette approche est intéressante. Cependant, les inventeurs ont constaté qu'elle pose un problème important de sécurité, de fonctionnement et de manipulation.

En effet, lorsque l'élément d'occultation n'est que partiellement déployé, les palettes pare-soleil peuvent être manipulées. Si elles sont inclinées, elles se retrouvent sensiblement au-dessus de la tête du conducteur ou de son passager, et peuvent être dangereuses, notamment en cas de choc ou d'accident.

Par ailleurs, la manipulation de l'élément d'occultation alors qu'une, ou plusieurs, palette pare-soleil est inclinée, peut entraîner des blocages du dispositif, voire la casse de celui-ci. En outre, le déplacement de la palette pare-soleil en position inclinée, lorsque l'élément d'occultation est déplacé, peut entraîner un contact avec la tête du conducteur, qui peut bien entendu avoir des conséquences très dangereuses.

L'invention a notamment pour objectif de pallier ces différents inconvénients de l'état de l'art.

Plus précisément, un objectif de l'invention est de fournir une technique d'occultation d'une surface vitrée d'un pavillon et/ou de la partie supérieure d'un pare-brise qui offre également des fonctions de palette pare-soleil qui soient efficaces et sûres.

Notamment, un objectif de l'invention est de fournir une telle technique, qui supprime les risques de mauvaise utilisation de palette pare-soleil, et supprime ainsi les risques d'accident ou à tout le moins de choc de la palette sur la tête d'un des occupants du véhicule.

Un autre objectif de l'invention est de fournir une telle technique, qui évite de façon efficace tout endommagement du dispositif qui pourrait être dû à un mauvais positionnement des palettes pare-soleil lors de la manipulation de l'élément d'occultation.

L'invention a également pour objectif de fournir une telle technique, qui soit simple à mettre en oeuvre et à réaliser.

Un autre objectif de l'invention est de fournir une telle technique, qui ne nécessite pas de moyens complexes, et qui soit peu coûteuse.

Ces objectifs, ainsi que d'autres qui apparaîtront par la suite, sont atteints grâce à l'invention à l'aide d'un dispositif d'occultation d'au moins une portion d'un pavillon d'un véhicule automobile comprenant un élément d'occultation guidé en coulissement le long de deux rails entre une position repliée et une position déployée, l'élément d'occultation portant au moins une palette pare-soleil solidarisée à l'élément d'occultation à l'aide de moyens d'articulation permettant d'incliner la palette depuis une position de repos dans laquelle elle se trouve sensiblement dans le plan défini par l'élément d'occultation vers au moins une position de protection dans laquelle elle est inclinée par rapport audit plan, qui, selon l'invention, comprend des moyens de contrôle de l'inclinaison de la ou desdites palettes, en fonction de la position dudit élément d'occultation.

Ainsi, il est possible d'interdire la manipulation des pare-soleil dans certaines positions de l'élément d'occultation. On limite ainsi les risques de mauvaise utilisation de celui-ci.

De façon avantageuse, les moyens de contrôle empêchent le passage de la ou des palettes de la position de repos à la position d'occultation lorsque l'élément d'occultation n'est pas dans la position déployée et/ou empêchent le passage de l'élément d'occultation de la position déployée à la position repliée, lorsque la ou les palettes ne sont pas dans la position de repos.

Les pare-soleil sont ainsi nécessairement en position de rangement, ou de repos, quand l'élément d'occultation n'est pas en position déployée.

Selon un mode de réalisation avantageux de l'invention, les moyens de contrôle comprennent des moyens d'indexation mobiles dans au moins un des rails, configurés de façon à libérer en rotation les moyens d'articulation et/ou à être mobiles en rotation simultanément avec les moyens d'articulation lorsque l'élément d'occultation est en position déployée.

Préférentiellement, les moyens d'indexation comprennent au moins un curseur sortant du rail et/ou pénétrant dans un logement en bout de rail permettant une rotation, lorsque l'élément d'occultation est en position déployée.

Selon un autre mode de réalisation avantageux de l'invention, les moyens de contrôle comprennent un volet mobile par rapport à la palette entre une position fermée dans laquelle il est essentiellement ramené dans et/ou le long de la palette et une position ouverte dans laquelle il occulte, lorsque l'élément d'occultation est dans la position déployée, une zone latérale s'étendant dans le prolongement de la palette.

Préférentiellement, le volet mobile est désolidarisé en rotation de ladite palette de façon à permettre son inclinaison, lorsque l'élément d'occultation est dans la position déployée, et maintient la palette dans la position de repos sinon.

De façon avantageuse, le volet présente une section en forme de U, venant chevaucher la palette lorsque l'élément d'occultation n'est pas dans la position déployée.

Le maintien de la palette pare-soleil se fait ainsi de façon simple et efficace.

Avantageusement, la palette et le volet sont montés sur un arbre commun.

Ce mode de réalisation permet une plus grande simplicité du montage du pare-soleil.

De façon avantageuse, dans la position déployée, des moyens de verrouillage agissent pour bloquer le volet mobile en position ouverte lorsque la palette pare-soleil n'est pas dans la position de repos.

Ainsi on évite de détériorer ou de bloquer le dispositif d'occultation et de risquer de blesser un des occupants des places avant du véhicule.

Selon un mode de réalisation particulier, les rails ne sont pas parallèles, et en ce qu'il comprend des moyens pour contrôler le positionnement latéral de la ou des palettes, en fonction du positionnement de l'élément d'occultation.

Selon un mode de réalisation de l'invention, les moyens pour contrôler le positionnement latéral agissent sur les palettes de façon que la distance entre la palette et le rail auquel elle est associée soit sensiblement constante.

Selon un autre mode de réalisation les moyens pour contrôler le positionnement latéral agissent sur les palettes de façon que la distance entre la palette et le rail auquel elle est associée augmente au fur et à mesure que l'écartement entre les rails augmente.

L'invention concerne également les véhicules automobiles comprenant un dispositif d'occultation tel que décrit ci dessus.

D'autres caractéristiques et avantages de l'invention apparaîtront à la lecture de la description suivante de deux modes de réalisation préférentiels, donnés à titre de simple exemple illustratif et non limitatif, et des figures annexées parmi lesquelles :
- les figures 1a et 1b illustrent, en coupe et de façon simplifiée, un premier mode de réalisation de l'invention, mettant en oeuvre un patin d'indexation ;
- la figure 2 est une vue simplifiée de dessus d'un deuxième mode de réalisation de l'invention, mettant en oeuvre des volets mobiles ;
- la figure 3 est une vue partielle du dispositif de la figure 2, illustrant le fonctionnement du volet ;
- les figures 4a et 4b sont des vues en coupe du dispositif de la figure 3, respectivement en position de repos et en position de protection contre l'éblouissement ;
- les figures 5a et 5b illustrent une variante de l'invention mettant en oeuvre des volets mobiles respectivement verrouillés en position ouverte lorsque la palette n'est pas en position de repos, et déverrouillés pour permettre le coulissement de la palette.

L'invention propose donc un dispositif d'occultation d'un pavillon vitré (pouvant mettre en oeuvre un store à enrouleur ou un velum) portant au moins, et classiquement, deux palettes pare-soleil pouvant être inclinées pour occulter la partie supérieure du pare-brise en cas de besoin.

Selon l'invention, on prévoit des moyens de contrôle, qui ne permettent l'inclinaison des palettes pare-soleil que si l'élément d'occultation est en position déployée. On garantit ainsi que les palettes pare-soleil ne peuvent pas être inclinées tant que l'élément d'occultation n'est pas complément déployé, et en particulier tant qu'il est en mouvement.

Selon une variante de l'invention, avantageusement cumulée avec la première, les moyens de contrôle assurent également qu'il n'est pas possible de replier l'élément d'occultation tant que les palettes pare-soleil n'ont pas été ramenées dans leur position de repos. Ainsi, à nouveau, on évite tout contact entre la tête d'un occupant et la palette, et on préserve le dispositif contre d'éventuelles détériorations.

Ces moyens de contrôle assurent donc une indexation des palettes pare-soleil.

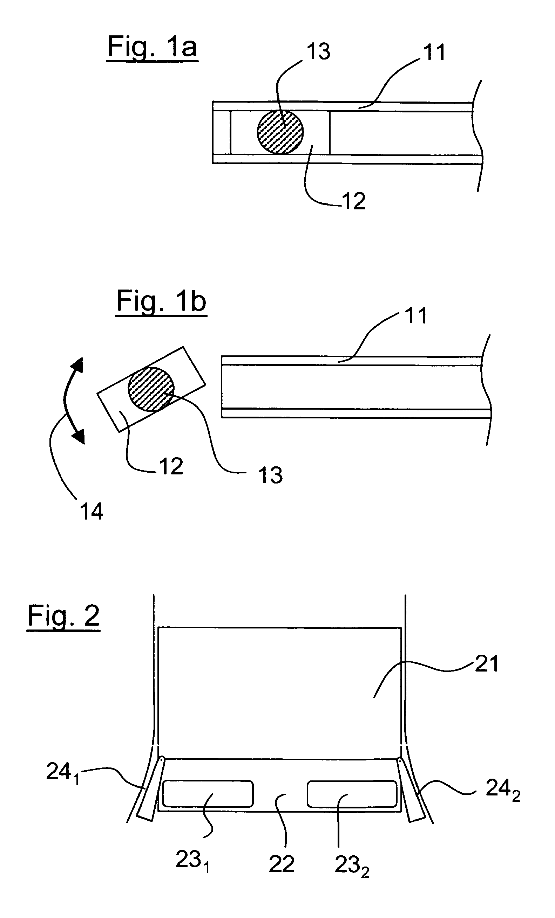

Selon un premier mode de réalisation, illustré par les figures 1a et 1b, l'élément d'occultation principale, non représenté, est guidé en coulissement entre sa position déployée et sa position repliée par l'intermédiaire de deux rails de guidage.

Ces rails de guidage 11 assurent également, comme illustré sur les vues en coupe des figure 1a et 1b, le guidage d'un patin 12 solidaire de l'arbre 13 permettant l'inclinaison de la palette pare-soleil.

La forme du patin 12 est définie de façon à pouvoir coulisser dans le rail 11, sans degré de liberté autre que la direction de coulissement, comme illustré par la figure 1a. Ainsi, tant que le patin 12 se déplace dans le rail (ce qui signifie que l'élément d'occultation est en cours de repli ou de déploiement), l'arbre 13 est bloqué, et la palette reste dans une position de repos, parallèle à l'élément d'occultation.

Le dispositif est conçu de façon qu'en position extrême, c'est-à-dire lorsque l'élément d'occultation est complètement déployé, le patin 12 dépasse le rail 11, comme illustré par la figure 1b. Il est alors mobile en rotation, comme illustré par la flèche 14. Cette rotation correspond à l'inclinaison de la palette pare-soleil, reliée au patin 12 par l'arbre 13. Des butées, non représentées, par exemple sous la forme d'un logement adapté, définissent la course possible de la palette. Par exemple, on s'assure préférentiellement que la rotation ne puisse pas aller au-delà de 70° vers l'avant, par rapport à l'horizontal.

On comprend qu'ainsi la rotation 14 n'est possible que lorsque l'élément d'occultation est complément déployé et que le patin est sorti du rail. Inversement, pour permettre le repli de l'élément d'occultation, il faut que le patin pénètre à nouveau dans le rail, et qu'il soit donc ramené parallèlement à celui-ci. En d'autres termes, il faut préalablement ramener la palette pare-soleil en position de repos pour que le patin 12 pénètre dans le rail 11, et que le repli de l'élément d'occultation soit possible.

Souvent, la largeur de la surface vitrée est variable, et on est alors contraint d'utiliser des rails non parallèles pour le guidage de l'élément d'occultation. Dans ce cas, différentes approches peuvent être envisagées pour contrôler la position des palettes pare-soleil.

Dans une première approche, le pare-soleil reste à distance constante des rails 11. Dans ce cas, l'arbre de rotation 13 du pare-soleil est de longueur fixe et le pare-soleil qui y est relié peut si nécessaire, effectuer un coulissement par rapport à l'élément d'occultation, dans une direction parallèle à l'arbre 13 lorsque l'élément d'occultation se déplace.

Dans une deuxième approche, le pare-soleil reste à une position constante sur l'élément d'occultation. Dans ce cas, l'arbre de rotation peut avoir une longueur variable. Il peut par exemple être constitué de deux éléments coulissant l'un dans l'autre, permettant à l'arbre de rotation 13 de transmettre la rotation du patin 12 à la palette de pare-soleil et de s'adapter à la distance variable entre la palette de pare-soleil et le rail 11.

Selon un autre mode de réalisation, illustré par les figures 2, 3, 4a et 4b, l'indexation des palettes pare-soleil est assurée par des volets.

En figure 2, on a représenté schématiquement le pavillon vitré d'un véhicule, et le dispositif d'occultation en position déployée.

Le dispositif d'occultation comprend un élément d'occultation principal, ici sous la forme d'un velum 21 se prolongeant par une traverse 22, portant deux palettes 23₁ et 23₂. Dans le cas où l'élément d'occultation 21 est une toile de store à enrouleur, la traverse 22 peut constituer, ou être solidarisée à, une barre de tirage.

On a prévu deux volets 24₁ et 24₂, mobiles en rotation par rapport à la traverse 22. Comme expliqué plus en détail par la suite, ces volets assurent la fonction d'indexation, ou de contrôle, des palettes pare-soleil. En outre, avantageusement, ils assurent au moins en partie l'occultation des bords supérieurs du pare-brise, qui ne peuvent pas être couverts par la traverse 22 (du fait que la surface vitrée est plus large en cet emplacement).

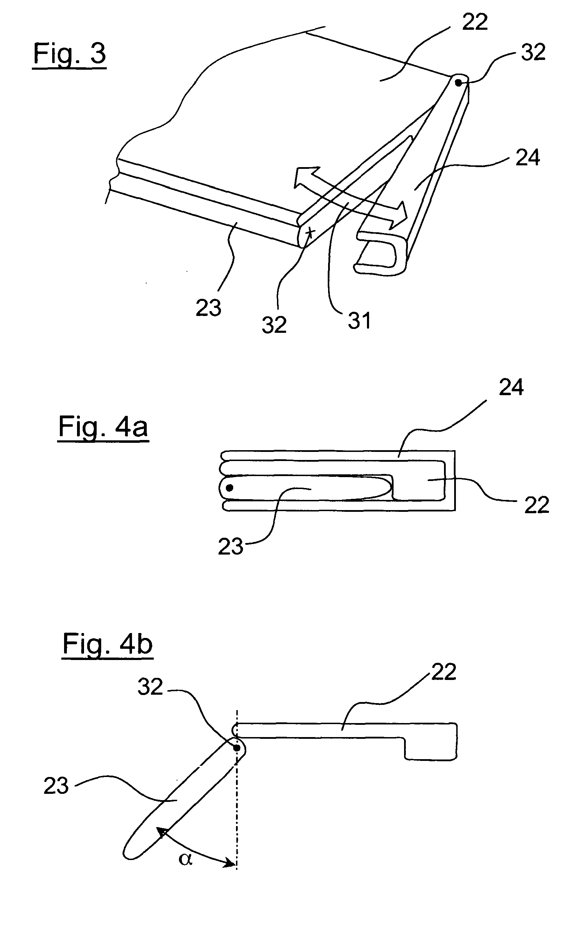

Comme illustré par la figure 3, le volet 24 est mobile en rotation (flèche 31) autour d'un axe 32 solidaire de la traverse 22. Le volet 24 est monté de façon qu'il s'éloigne de la palette et de la traverse lorsqu'il n'est pas contraint, par exemple par l'intermédiaire d'un ressort de rappel.

Lors du repli ou du déploiement de l'élément d'occultation 21, et tant que cet élément n'est pas complètement déployé, le volet 24 est maintenu contre la traverse porteuse 22 et la palette pare-soleil 23, comme illustré en coupe par la figure 4a. Ceci est assuré par l'intermédiaire des rails de guidage.

Comme on le voit sur la figure 4a, le volet 24, qui a une section en forme de U, et donc une fonction de « fourchette », maintient bloquée la palette 23 le long de la traverse 22, qui a d'ailleurs une forme adaptée pour définir un logement à la palette.

Quand l'élément d'occultation 21 est complètement déployé (figure 2), le volet 24 s'écarte de la traverse (figure 3). La palette 23 peut alors être inclinée, par rotation autour de l'axe 32.

Comme illustré en figure 4b, la palette 23 peut alors pivoter par rapport à la traverse 22 qui reste fixe. Avantageusement, une butée mécanique empêche que l'angle α par rapport à la verticale soit supérieur à 70°. On contrôle ainsi le débattement angulaire vers l'avant.

Ainsi, à nouveau, on assure que l'inclinaison des palettes pare-soleil n'est possible que lorsque l'élément d'occultation principal 21 est complètement déployé.

De la même façon, le volet 24 est avantageusement configuré de façon qu'il ne puisse pas être ramené sur la traverse (figure 4a) si la palette 23 n'a pas été au préalable ramenée dans sa position de repos. Ceci peut être obtenu par exemple simplement par le fait que le volet bute sur le pare-soleil. Pour permettre le repli du dispositif, il faut bien sûr que le volet 24 se replie. Il faut donc au préalable avoir ramené la palette dans sa position de repos.

La solution technique illustrée par les figures 3, 4a et 4b n'interdit cependant pas le déplacement de dispositif d'occultation de la position déployée vers la position repliée alors que les volets sont inclinés dans la position de protection.

Une telle mobilité du dispositif d'occultation lorsque les palettes pare-soleils ne sont pas en position de repos peut dans certains cas être préjudiciable car elle peut être à l'origine d'une détérioration ou d'un blocage du dispositif d'occultation, en particulier des palettes pare-soleils, et présente un risque si une palette pare-soleil vient à percuter le front ou la tête d'un occupant des places avant du véhicule (conducteur ou passager). En outre, les dommages matériels et/ou physiques peuvent être d'autant plus importants que le dispositif d'occultation est actionné au moyen d'une commande électrique séquentielle.

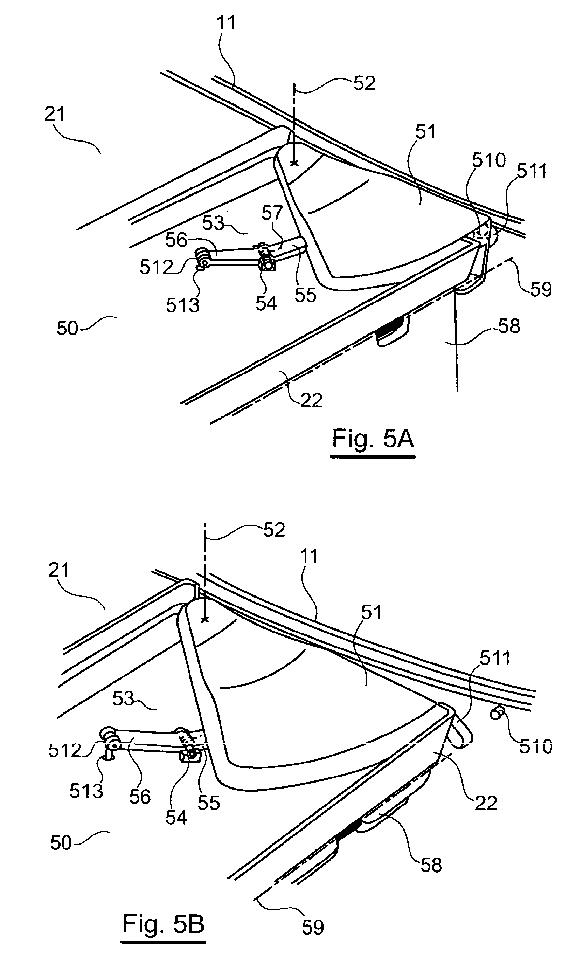

C'est pourquoi, dans une variante à l'invention, illustrée par les figures 5a et 5b, le dispositif comprend des moyens de verrouillage 53 pour empêcher une telle mobilité.

Dans cette variante, les volets 51 en forme générale de secteur de disque sont articulés en rotation autour d'un axe de rotation 52 par rapport à la traverse 22 prolongeant le velum 21.

Dans la position où le dispositif d'occultation 50 est déployé, présentée figure 5a, le volet 51 est plaqué contre le rail de guidage 11 par la force de rappel d'un ressort ou de tout autre moyen de rappel. Des moyens de verrouillage 53 encore appelés butée mobile, en position relevée, sont en appui sur le bord interne du volet et empêchent celui-ci de se replier vers l'intérieur de la traverse 22. La butée mobile 53 est solidaire de la traverse 22, et comprend un corps monté mobile autour d'un axe 54 se prolongeant par deux bras 55 et 56. Un ressort de rappel 57 assemblé autour de l'axe 54 maintient le bras 55 de la butée mobile 53 en position relevée. Dans cette position, la palette pare-soleil 58 peut être librement orientée vers l'avant autour de l'axe 59 dans la limite du débattement angulaire autorisé par la butée mécanique 510 sur lequel le doigt 511 solidaire de la palette pare-soleil 58 vient en contact.

Sur l'extrémité du bras 56 la plus éloignée de l'axe 52 est montée une biellette 512 mobile en rotation par rapport au bras 56. Le corps de la biellette 512 est guidé en translation dans un orifice débouchant cylindrique 513 formé dans l'épaisseur de la traverse 22.

Afin de pouvoir reculer le dispositif d'occultation, il est nécessaire de libérer le volet 51 en relâchant, ou déverrouillant, la butée mobile 53. Ceci est obtenu en rabattant la palette pare-soleil 58 dans sa position de repos, comme illustré figure 5b.

La surface intérieure de la palette pare-soleil 58 vient alors en contact avec la face plane de l'extrémité inférieure de la biellette 512, et la biellette 512 est repoussée vers le haut. L'extrémité libre du bras 56 est par conséquent entraînée vers le haut, ce qui provoque le basculement de la butée mobile 53 autour de l'axe 54 et déplace le bras 55 vers le bas, libérant ainsi le volet 51. Dès lors, le dispositif d'occultation 50 peut être replié sans risque, puisque la palette pare-soleil 58 est en position de repos. Dans ce mouvement, le volet 51, en contact avec la face interne du rail de guidage 11, est progressivement repoussé vers l'intérieur du velum par le rail 11 et vient ainsi envelopper le velum et la palette pare-soleil qui lui est accolée grâce à sa section en forme de U.

De nombreuses variantes de cette approche peuvent bien sûr être mises en oeuvre. En particulier, la forme du volet peut être modifiée, par exemple de façon qu'il présente un élément pénétrant dans la palette, uniquement lorsque celle-ci est en position de repos.

Les palettes pare-soleil peuvent également, dans ce mode de réalisation, coulisser par rapport à l'élément d'occultation selon la direction de leur arbre de rotation. Ce coulissement peut par exemple être lié à un mouvement des volets.

## Revendications

1. Dispositif d'occultation d'au moins une portion d'un pavillon d'un véhicule automobile comprenant un élément d'occultation (21) guidé en coulissement le long de deux rails (11) entre une position repliée et une position déployée,
ledit élément d'occultation (21) portant au moins une palette pare-soleil (23) solidarisée audit élément d'occultation (21) à l'aide de moyens d'articulation permettant d'incliner ladite palette (23) depuis une position de repos dans laquelle elle se trouve sensiblement dans le plan défini par ledit élément d'occultation (21) vers au moins une position de protection dans laquelle elle est inclinée par rapport audit plan,
**caractérisé en ce qu'**il comprend des moyens de contrôle de l'inclinaison de la ou desdites palettes (23), en fonction de la position dudit élément d'occultation (21), empêchant le passage de la ou desdites palettes (23) de la position de repos à la position d'occultation lorsque ledit élément d'occultation (21) n'est pas dans ladite position déployée et/ou empêchant le passage dudit élément d'occultation (21) de ladite position déployée à ladite position repliée, lorsque la ou lesdites palettes (23) ne sont pas dans ladite position de repos,
lesdits moyens de contrôle comprenant des moyens d'indexation mobiles dans au moins un desdits rails (11), configurés de façon à libérer en rotation lesdits moyens d'articulation et/ou à être mobiles en rotation simultanément avec lesdits moyens d'articulation lorsque ledit élément d'occultation (21) est en position déployée.

2. Dispositif d'occultation selon la revendication 1, **caractérisé en ce que** lesdits moyens d'indexation comprennent au moins un curseur sortant dudit rail (11) et/ou pénétrant dans un logement en bout de rail permettant une rotation, lorsque ledit élément d'occultation (21) est en position déployée.

3. Dispositif d'occultation selon la revendication 1, **caractérisé en ce que** lesdits moyens de contrôle comprennent un volet mobile (24) par rapport à ladite palette (23) entre une position fermée dans laquelle il est essentiellement ramené dans et/ou le long de ladite palette (23) et une position ouverte dans laquelle il occulte, lorsque ledit élément d'occultation (21) est dans ladite position déployée, une zone latérale s'étendant dans le prolongement de ladite palette (23).

4. Dispositif d'occultation selon la revendication 3, **caractérisé en ce que** ledit volet mobile (24) est désolidarisé en rotation de ladite palette de façon à permettre son inclinaison, lorsque ledit élément d'occultation (21) est dans ladite position déployée, et maintient ladite palette (23) dans ladite position de repos sinon.

5. Dispositif d'occultation selon l'une quelconque des revendications 3 et 4, **caractérisé en ce que** ledit volet (24) présente une section en forme de U, venant chevaucher ladite palette lorsque ledit élément d'occultation (21) n'est pas dans ladite position déployée.

6. Dispositif d'occultation selon l'une quelconque des revendications 3 à 5, **caractérisé en ce que** ladite palette (23) et ledit volet (24) sont montés sur un arbre commun.

7. Dispositif d'occultation selon l'une quelconque des revendications 3 à 6, **caractérisé en ce que** dans ladite position déployée, des moyens de verrouillage agissent pour bloquer ledit volet (24) en position ouverte lorsque ladite palette (23) n'est pas dans ladite position de repos.

8. Dispositif d'occultation selon l'une quelconque des revendications 1 à 7, **caracterisé en ce que** lesdits rails **(**11) ne sont pas parallèles, et **en ce qu'**il comprend des moyens pour contrôler le positionnement latéral de la ou desdites palettes (23), en fonction du positionnement dudit élément d'occultation (21).

9. Dispositif d'occultation selon la revendication 8, **caractérisé en ce que** lesdits moyens pour contrôler le positionnement latéral agissent sur lesdites palettes (23) de façon que la distance entre la palette et le rail (11) auquel elle est associée soit sensiblement constante.

10. Dispositif d'occultation selon la revendication 8, **caractérisé en ce que** lesdits moyens pour contrôler le positionnement latéral agissent sur lesdites palettes de façon que la distance entre la palette (23) et le rail (11) auquel elle est associée augmente au fur et à mesure que l'écartement entre lesdits rails augmente.

11. Véhicule automobile comprenant un dispositif d'occultation d'au moins une portion d'un pavillon d'un véhicule automobile comprenant un élément d'occultation (21) guidé un coulissement le long de deux rails (11) entre une position repliée et une position déployée,
ledit élément d'occultation (21) portant au moins une palette pare-soleil (23) solidarisée audit élément d'occultation (21) à l'aide de moyens d'articulation permettant d'incliner ladite palette (23) depuis une position de repos dans laquelle elle se trouve sensiblement dans le plan défini par ledit élément d'occultation vers au moins une position de protection dans laquelle elle est inclinée par rapport audit plan,
**caractérisé en ce qu'**il comprend des moyens de contrôle de l'inclinaison de la ou desdites palettes, en fonction de la position dudit élément d'occultation (21), empêchant le passage de la ou desdites palettes (23) de la position de repos à la position d'occultation lorsque ledit élément d'occultation (21) n'est pas dans ladite position déployée et/ou empêchant le passage dudit élément d'occultation (21) de ladite position déployée à ladite position repliée, lorsque la ou lesdites palettes (23) ne sont pas dans ladite position de repos,
lesdits moyens de contrôle comprenant des moyens d'indexation mobiles dans au moins un desdits rails (11), configurés de façon à libérer en rotation lesdits moyens d'articulation et/ou à être mobiles en rotation simultanément avec lesdits moyens d'articulation lorsque ledit élément d'occultation (21) est en position déployée.

## Claims

1. Device for closing off at least a portion of a motor vehicle roof, comprising a closure element (21) slidably guided along two rails (11) between a folded position and a deployed position,
said closure element (21) carrying at least one sun visor (23) secured to said closure element (21) by articulation means making it possible to incline said visor (23) from an idle position in which it is situated substantially in the plane defined by said closure element (21) to at least one protective position in which it is inclined with respect to said plane,
**characterised in that** it comprises means of controlling the inclination of said visor or visors (23) according to the position of said closure element (21), preventing said visor or visors (23) from passing from the idle position to the closure position when said closure element (21) is not in said deployed position and/or preventing said closure element (21) from passing from said deployed position to said folded position when said visor or visors (23) are not in said idle position,
said control means comprising movable means of location in at least one of said rails (11), configured so as to release said articulation means with respect to rotation and/or to be able to move in rotation simultaneously with said articulation means when said closure element (21) is in the deployed position.

2. Closure device according to claim 1, **characterised in that** said location means comprise at least one slider emerging from said rail (11) and/or entering a housing at the rail end allowing rotation when said closure element (21) is in the deployed position.

3. Closure device according to claim 1, **characterised in that** said control means comprise a flap (24) able to move with respect to said visor (23) between a closed position in which it is essentially brought into and/or along said visor (23) and an open position in which, when said closure element (21) is in said deployed position, it closes off a side region extending in line with said visor (23).

4. Closure device according to claim 3, **characterised in that** said movable flap (24) is disconnected from said visor with respect to rotation so as to enable it to be inclined, when said closure element (21) is in said deployed position, and holds said visor (23) in said idle position otherwise.

5. Closure device according to either one of claims 3 and 4, **characterised in that** said flap (24) has a U-shaped cross-section, straddling said visor when said closure element (21) is not in said deployed position.

6. Closure device according to any one of claims 3 to 5, **characterised in that** said visor (23) and said flap (24) are mounted on a common shaft.

7. Closure device according to any one of claims 3 to 6, **characterised in that**, in said deployed position, locking means act in order to lock said flap (24) in the open position when said visor (23) is not in said idle position.

8. Closure device according to any one of claims 1 to 7, **characterised in that** said rails (11) are not parallel and **in that** it comprises means for controlling the lateral positioning of said visor or visors (23) according to the positioning of said closure element (21) .

9. Closure device according to claim 8, **characterised in that** said means for controlling the lateral positioning act on said visors (23) so that the distance between the visor and the rail (11) with which it is associated is substantially constant.

10. Closure device according to claim 8, **characterised in that** said means for controlling the lateral positioning act on said visors so that the distance between the pallet (23) and the rail (11) with which it is associated increases as the separation between said rails increases.

11. Motor vehicle comprising a device for closing off at least one portion of a roof of a motor vehicle, comprising a closure element (21) slidably guided along two rails (11) between a folded position and a deployed position,
said closure element (21) carrying at least one sun visor (23) secured to said closure element (21) by articulation means making it possible to incline said visor (23) from an idle position in which it is situated substantially in the plane defined by said closure element to at least one protective position in which it is inclined with respect to said plane,
**characterised in that** it comprises means of controlling the inclination of said visor or visors according to the position of said closure element (21), preventing said visor or visors (23) from passing from the idle position to the closure position when said closure element (21) is not in said deployed position and/or preventing said closure element (21) from passing from said deployed position to said folded position when said visor or visors (23) are not in said idle position,
said control means comprising movable means of location in at least one of said rails (11), configured so as to release said articulation means with respect to rotation and/or to be able to move in rotation simultaneously with said articulation means when said closure element (21) is in the deployed position.

## Patentansprüche

1. Vorrichtung zum Beschatten mindestens eines Abschnitts eines Verdecks eines Kraftfahrzeugs, umfassend ein Beschattungselement (21), das an zwei Schienen (11) entlang zwischen einer eingeklappten Position und einer ausgeklappten Position gleitend geführt wird,
wobei das Beschattungselement (21) mindestens eine Sonnenschutzklappe (23) trägt, die anhand von Gelenkmitteln, die es ermöglichen, die Klappe (23) von einer Ruheposition, in der sie sich im Wesentlichen in der Ebene befindet, die durch das Beschattungselement (21) definiert wird, in mindestens eine Schutzposition, in der sie im Verhältnis zu der Ebene geneigt ist, zu neigen, mit dem Beschattungselement (21) fest verbunden ist,
**dadurch gekennzeichnet, dass** sie Mittel zum Steuern der Neigung der Klappe(n) (23) in Abhängigkeit von der Position des Beschattungselements (21) umfasst, die den Übergang der Klappe(n) (23) von der Ruheposition in die Beschattungsposition verhindern, wenn das Beschattungselement (21) sich nicht in der ausgeklappten Position befindet, und/oder den Übergang des Beschattungselements (21) von der ausgeklappten Position in die eingeklappte Position verhindern, wenn die Klappe (n) (23) sich nicht in der Ruheposition befindet bzw. befinden,
wobei die Steuermittel Mittel zum Indexieren umfassen, die in mindestens einer der Schienen (11) beweglich sind, die konfiguriert sind, um drehmäßig die Gelenkmittel freizugeben und/oder um drehmäßig gleichzeitig mit den Gelenkmitteln beweglich zu sein, wenn das Beschattungselement (21) sich in der ausgeklappten Position befindet.

2. Beschattungsvorrichtung nach Anspruch 1, **dadurch gekennzeichnet, dass** die Indexierungsmittel mindestens einen Schieber umfassen, der aus der Schiene (11) herausragt und/oder in eine Aufnahme am Ende der Schiene eindringt und eine Drehung ermöglicht, wenn sich das Beschattungselement (21) in der ausgeklappten Position befindet.

3. Beschattungsvorrichtung nach Anspruch 1, **dadurch gekennzeichnet, dass** die Steuermittel einen Flügel (24) umfassen, der im Verhältnis zu der Klappe (23) zwischen einer geschlossenen Position, in der er im Wesentlichen in die Klappe (23) zurück und/oder an dieser entlang geführt wird, und einer geöffneten Position, in der er, wenn das Beschattungselement (21) sich in der ausgeklappten Position befindet, eine seitliche Zone beschattet, die sich in der Verlängerung der Klappe (23) erstreckt, beweglich ist.

4. Beschattungsvorrichtung nach Anspruch 3, **dadurch gekennzeichnet, dass** der bewegliche Flügel (24) von der Klappe drehmäßig getrennt ist, um seine Neigung zu ermöglichen, wenn das Beschattungselement (21) sich in der ausgeklappten Position befindet, und ansonsten die Klappe (23) in der Ruheposition hält.

5. Beschattungsvorrichtung nach einem der Ansprüche 3 und 4, **dadurch gekennzeichnet, dass** der Flügel (24) einen U-förmigen Querschnitt aufweist, der die Klappe überlagert, wenn das Beschattungselement (21) sich nicht in der ausgeklappten Position befindet.

6. Beschattungsvorrichtung nach einem der Ansprüche 3 bis 5, **dadurch gekennzeichnet, dass** die Klappe (23) und der Flügel (24) auf einer gemeinsamen Welle montiert sind.

7. Beschattungsvorrichtung nach einem der Ansprüche 3 bis 6, **dadurch gekennzeichnet, dass** in der ausgeklappten Position Verriegelungsmittel einwirken, um den Flügel (24) in der geöffneten Position zu blockieren, wenn die Klappe (23) sich nicht in der Ruheposition befindet.

8. Beschattungsvorrichtung nach einem der Ansprüche 1 bis 7, **dadurch gekennzeichnet, dass** die Schienen (11) nicht parallel sind, und dass sie Mittel umfasst, um die seitliche Positionierung der Klappe(n) (23) in Abhängigkeit von der Positionierung des Beschattungselements (21) zu steuern.

9. Beschattungsvorrichtung nach Anspruch 8, **dadurch gekennzeichnet, dass** die Mittel zum Steuern der seitlichen Positionierung auf die Klappen (23) einwirken, so dass der Abstand zwischen der Klappe und der Schiene (11), mit der sie verknüpft ist, im Wesentlichen konstant ist.

10. Beschattungsvorrichtung nach Anspruch 8, **dadurch gekennzeichnet, dass** die Mittel zum Steuern der seitlichen Positionierung auf die Klappen einwirken, so dass der Abstand zwischen der Klappe (23) und der Schiene (11), mit der sie verbunden ist, in dem Maße zunimmt, wie der Zwischenraum zwischen den Schienen zunimmt.

11. Kraftfahrzeug, umfassend eine Vorrichtung zum Beschatten mindestens eines Abschnitts eines Verdecks eines Kraftfahrzeugs, die ein Beschattungselement (21) umfasst, das an zwei Schienen (11) entlang zwischen einer eingeklappten Position und einer ausgeklappten Position gleitend geführt wird,
wobei das Beschattungselement (21) mindestens eine Sonnenschutzklappe (23) trägt, die anhand von Gelenkmitteln, die es ermöglichen, die Klappe (23) von einer Ruheposition, in der sie sich im Wesentlichen in der Ebene befindet, die durch das Beschattungselement definiert wird, in mindestens eine Schutzposition, in der sie im Verhältnis zu der Ebene geneigt ist, zu neigen, mit dem Beschattungselement (21) fest verbunden ist,
**dadurch gekennzeichnet, dass** es Mittel umfasst zum Steuern der Neigung der Klappe(n) in Abhängigkeit von der Position des Beschattungselements (21), die den Übergang der Klappe(n) (23) von der Ruheposition in die Beschattungsposition verhindern, wenn das Beschattungselement (21) sich nicht in der ausgeklappten Position befindet, und/oder den Übergang des Beschattungselements (21) von der ausgeklappten Position in die eingeklappte Position verhindern, wenn die Klappe(n) (23) sich nicht in der Ruheposition befindet bzw. befinden,
wobei die Steuermittel Mittel zum Indexieren umfassen, die in mindestens einer der Schienen (11) beweglich sind, die konfiguriert sind, um drehmäßig die Gelenkmittel freizugeben und/oder um drehmäßig gleichzeitig mit den Gelenkmitteln beweglich zu sein, wenn das Beschattungselement (21) sich in der ausgeklappten Position befindet.
